Europäisches Patentamt

European Patent Office

Office européen des brevets

(11) Publication number: **0 184 299**
**B1**

(12) EUROPEAN PATENT SPECIFICATION

(45) Date of publication of patent specification: 22.06.88

(51) Int. Cl.⁴: **H 01 M 10/39,** H 01 M 2/08

(21) Application number: 85307399.7

(22) Date of filing: 15.10.85

(54) Method of manufacturing a sodium-sulphur storage battery.

(30) Priority: 07.12.84 JP 259594/84

(43) Date of publication of application:
11.06.86 Bulletin 86/24

(45) Publication of the grant of the patent:
22.06.88 Bulletin 88/25

(84) Designated Contracting States:
DE FR GB

(56) References cited:
DE-A-3 114 348
GB-A-2 126 774
GB-A-2 127 615
US-A-4 375 127

(73) Proprietor: YUASA BATTERY CO., LTD.
6-6, Johsai-cho
Takatsuki-shi, Osaka (JP)

(72) Inventor: Kagawa, Hiroshi
6-6, Jyousai-cho
Takatsuki-shi Osaka (JP)

(74) Representative: Barker, Rosemary Anne et al
c/o O'BRIENS 94 Market Street
Manchester M1 1PJ (GB)

Courier Press, Leamington Spa, England.

# 0 184 299

## Description

The present invention relates to a method of manufacturing a sodium-sulphur storage battery which involves thermocompressively jointing an alpha alumina ring of ceramic to positive and negative covers of metal.

Conventionally, in a sodium-sulphur storage battery, an alpha alumina ring is joined to negative and positive covers by means of thermocompressive jointing. This thermocompressive jointing is effective to join metallic material, such as that of the negative and positive covers, together with different material, such as ceramic, therebetween to electrically insulate the metallic covers from each other, and it is widely used to form a perfectly sealed structure of a battery, such as a sodium-sulphur storage battery, which is operated at high temperature. However, the negative and positive covers of a sodium-sulphur storage battery must have sufficient resistance to chemical and electrochemical attack by molten sulphur and sodium and thus are made from stainless steel. Therefore, in a heated condition before they are thermocompressively jointed, the surfaces thereof may be oxidized, resulting in insufficient gastightness. In order to prevent such oxidization, the thermocompressive jointing is performed in an atmosphere of inert gas or reducing gas or in a vacuum. This, however, requires expensive equipment and must necessarily involve batch type operation which results in low productivity.

It is an object of this invention to provide an improved manufacturing method for a sodium-sulphur storage battery by which productivity is improved and by which the gas-tightness achieved by thermocompressive jointing is also improved.

With this object in view, the invention provides a method of manufacturing a sodium-sulphur storage battery wherein the negative and positive covers, which are thermocompressively jointed to an alpha alumina ring, are provided on their surfaces with chrome diffusion layers and are provided at least on their surfaces, which are thermocompressively jointed, with coating layers of aluminium.

The covers may be made of stainless steel, iron, or an alloy of iron and nickel.

The chrome layers are preferably about 20 $\mu$m to 120 $\mu$m in thickness and the aluminium layers are preferably about 5 $\mu$m to 90 $\mu$m in thickness.

A particular feature of the method of the invention for manufacturing the aforesaid battery is that the thermocompressive jointing can be carried out in air.

The invention will be described further, by way of example, with reference to the accompanying drawings, in which:

Figure 1 is a sectional view of a sodium-sulphur storage battery manufactured according to the invention;

Figure 2 is a sectional view of part of a negative cover used in a sodium-sulphur storage battery according to the invention; and

Figure 3 is a sectional view of part of a positive cover used in a sodium-sulphur storage battery according to the invention.

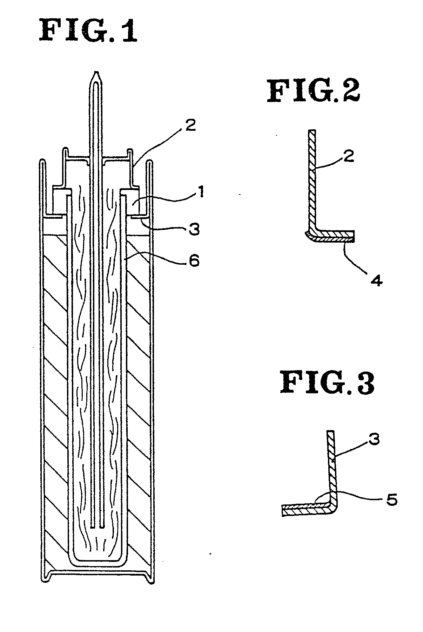

Referring to Figure 1, an alpha-alumina ring 1 is joined by solder glass to a solid electrolyte tube 6. Negative and positive covers 2 and 3 are thermocompressively jointed to upper and lower surfaces, respectively, of the ring 1. The negative and positive covers 2 and 3, which are shown in more detail Figures 2 and 3, are made of stainless steel (SUS304) plates of about 0.6 mm in thickness which have been formed by a press machine into appropriate shapes. Diffusion layers of chrome of about 35 $\mu$m thickness are provided over the entire surfaces of the covers 2 and 3, respectively. Also, coating layers of aluminium of about 25 $\mu$m in thickness are provided by vacuum deposition on the surfaces of the covers 2 and 3 which are to be thermocompressively jointed. These aluminium layers, 4 and 5 respectively, are shown schematically in Figures 2 and 3. These aluminium coating layers may be formed by fusion binding in an atmosphere of reducing gas instead of by vacuum deposition.

In production tests the negative and positive covers 2 and 3 have been heated to 600°C with the alpha alumina rings therebetween and these have been thermocompressively jointed in air under a pressure of about 6 tons with the aluminium rings 4 and 5 between the thermocompressively jointing surfaces thereof. A conventional battery has also been made under the same conditions, the negative and positive covers of the conventional battery obviously *not* being provided with a chrome diffusion layer or an aluminium coating layer.

Tests were performed on the two types of battery by determining the quantity of leaked helium. Ten batteries made according to the invention and ten of the conventional type were tested and the results are shown in the following table:

TABLE 1

| Battery Type \ Gastightness | Quantity of Leaked Helium (bar . l/s.) | | | | |
|---|---|---|---|---|---|
| | $10^{-1}$ | $10^{-3}$ | $10^{-5}$ | $10^{-7}$ | $10^{-9}$ |
| Invention | 0 | 0 | 3 | 6 | 1 |
| Conventional | 7 | 3 | 0 | 0 | 0 |

2

As shown in the table 1, seven batteries from the ten according to the invention leaked less than the quantity of $10^{-5}$ bar . l/s., while seven batteries from the ten of conventional type leaked more than the quantity of $10^{-1}$ bar . l/s.

As apparent from the above, the gastightness of the battery of the invention is remarkably improved compared to the conventional battery. Moreover, in the test, the thermocompressively jointed surfaces were peeled, and the peeled surfaces were observed. In the battery of the invention, in which intended width of the jointing surfaces is about 4 mm, annular surfaces of about 3.5 mm in width were actually jointed around the whole circumference, while in the conventional battery the stainless steel of the jointing surfaces was partially oxidized so that they were imperfectly jointed. Indeed in the latter case the jointed surfaces were only about 1.5 mm in width. These differences are probably the cause of the differences in gastightness.

The present invention is not restricted to the shapes of the negative and positive covers, the conditions of the thermocompressive jointing, or the method of forming the aluminium coating layers, which have been described in connection with above embodiment.

The sodium-sulphur storage battery made according to the invention, as described above, has enhanced gastightness and in the manufacturing method the thermocompressively jointing can be performed in the air so that the equipment can be inexpensive and a line production system can be employed resulting in an increased level of productivity.

**Claims**

1. A method of manufacturing a sodium-sulphur storage battery wherein a negative cover (2) is thermocompressively jointed to an upper surface of an alpha alumina ring (1) which is joined to a solid electrolyte tube (6), and a positive cover (3) is thermocompressively jointed to a lower surface of said alpha alumina ring (1), characterized in that diffusion layers of chrome are provided on the surfaces of the negative and positive covers (2, 3) in that coating layers (4, 5) of aluminium are provided at least on the surfaces, which are to be thermocompressively jointed, of the negative and positive covers (2, 3), and in that the respective jointing surfaces of the covers (2, 3) and the ring (1) are thermocompressively jointed with the aluminium layers (4, 5) therebetween.

2. A method as claimed in claim 1 wherein the negative and positive covers (2, 3) are made from stainless steel, iron or an alloy of iron and nickel.

3. A method as claimed in claim 1 or 2 wherein the chrome diffusion layers are about 20 µm to 120 µm, in thickness, and the aluminium layers are about 5 µm to 90 µm in thickness.

4. A method as claimed in claim 1, 2 or 3 wherein the thermocompressive jointing of the respective jointing surfaces of the covers (2, 3) and the ring (1), with the aluminium layers (4, 5) therebetween, is carried out in air.

**Patentansprüche**

1. Verfahren zur Herstellung einer aufladbaren Natrium-Schwefel-Batterie, wobei eine negative Abdeckung (2) durch Thermokompression mit einer oberen Stirnfläche eines Alpha-Tonerde-Ringes (1) verbunden wird, der mit einem massiven Elektrolytrohr (6) zusammengefügt ist, und eine positive Abdeckung (3) durch Thermokompression mit einer unteren Stirnfläche des Alpha-Tonerde-Ringes (1) verbunden wird, dadurch gekennzeichnet, daß Diffusionsschichten aus Chrom auf den Oberflächen der negativen und positiven Abdeckungen (2, 3) vorgesehen sind, daß Deckschichten (4, 5) aus Aluminium zumindest auf den durch Thermokompression zu verbindenden Oberflächen der negativen und positiven Abdeckungen (2, 3) vorgesehen sind und daß die jeweiligen Verbindungsflächen der Abdeckungen (2, 3) und des Ringes (1) durch Thermokompression mit den dazwischenbefindlichen Aluminiumschichten (4, 5) verbunden werden.

2. Verfahren nach Anspruch 1, dadurch gekennzeichnet, daß die negativen und positiven Abdeckungen (2, 3) aus rostfreiem Stehl, Eisen oder einer Eisen-Nickel-Legierung bestehen.

3. Verfahren nach Anspruch 1 oder 2, dadurch gekennzeichnet, daß die Chromdiffusionsschichten ca. 20 µm bis 120 µm und die Aluminiumschichten ca. 5 µm bis 90 µm dick sind.

4. Verfahren nach Anspruch 1, 2 oder 3, dadurch gekennzeichnet, daß die Thermokompressionsverbindung der jeweiligen Verbindungsflächen der Abdeckungen (2, 3) und des Ringes (1) mit den dazwischenliegenden Aluminiumschichten (4, 5) unter Luft durchgeführt wird.

**Revendications**

1. Un procédé de fabrication d'un accumulateur sodium-soufre dans lequel un couvercle négatif (2) est joint par thermocompression à une surface supérieure d'une bague d'alpha-alumine (1) qui est jointe à un tube (6) d'électrolyte solide, et un couvercle positif (3) est joint par thermocompression à une surface inférieure de ladite bague d'alpha-alumine (1), caractérisé par le fait que des couches de diffusion en chrome sont appliquées sur les surfaces des couvercles négatif et positif (2, 3), que des couches de revêtement (4, 5) en en aluminium sont appliquées au moins sur les surfaces, devant être jointes par

3

thermocompression, des couvercles négatif et positif (2, 3), et que les surfaces de jonction respectives des couvercles (2, 3) et de la bague (1) sont jointes par thermocompression alors que les couches d'aluminium (4, 5) sont intercalées entre elles.

2. Un procédé tel que revendiqué dans la revendication 1, dans lequel les couvercles négatif et positif (2, 3) sont constitués d'acier inoxydable, de fer ou d'un alliage de fer et de nickel.

3. Un procédé tel que revendiqué dans la revendication 1 ou 2, dans lequel les couches de diffusion en chrome ont une épaisseur d'environ 20 μm à 120 μm, et les couches d'aluminium ont une épaisseur d'environ 5 μm à 90 μm.

4. Un procédé tel que revendiqué dans la revendication 1, 2 ou 3, dans lequel la jonction par thermocompression des surfaces de jonction respectives des couvercles (2, 3) et de la bague (1), les couches d'aluminium (4, 5) étant intercalées entre elles, est effectuée dans l'air.

# FIG.1

# FIG.2

# FIG.3